# EUROPEAN PATENT APPLICATION

(11) **EP 2 367 372 A2**
(43) Date of publication of application: **21.09.2011**
(21) Application number: 11155561.1
(22) Date of filing: 23.02.2011
(51) Int. Cl.: H04W 12/06, H04L 29/06, G06F 21/00

(54) **Information processing apparatus, information processing method, program, server apparatus and information processing system**

(30) Priority: 17.03.2010 JP 2010061350
(71) Applicant: Sony Corporation, Tokyo 108-0075 (JP)
(72) Inventor: Ihara, Koji, Minato-ku Tokyo 108-0075 (JP); Mineo, Yoshiyuki, Minato-ku Tokyo 108-0075 (JP); Yamanaka, Shintaro, Minato-ku Tokyo 108-0075 (JP); Hishinuma, Tomohiko, Minato-ku Tokyo 108-0075 (JP)
(74) Representative: Jackson, Jonathan Andrew

(57) **Abstract**

An information processing apparatus includes a first obtaining unit, a setting unit, and a judgment unit. The first obtaining unit is capable of obtaining current position information. The setting unit is configured to set a first judgment condition to judge whether the current position information obtained by the first obtaining unit is transmitted to a site on a network that requests the current position information. The judgment unit is configured to judge whether the current position information is transmitted to the site on the basis of the first judgment condition set by the setting unit.

## Description

The present invention relates to an information processing apparatus, an information processing method, a program, a server apparatus, and an information processing system.

In related art, a system has been known which transmits to a Web server or the like positional information of a mobile terminal having a GPS (global positioning system) function as information of a current position of a user, and returns information of a store or the like based on the positional information to the mobile terminal. The system enables a user who uses a mobile terminal to know information of a store located near a current position, for example (see, for example paragraphs 0051, 0052, and the like of Japanese Patent Application Laid-open No. 2009-265864).

In recent years, as a standard of a next-generation HTML (hyper text markup language), an attention is focused on an HTML5. In the HTML5, by a GeoLocation function, an arbitrary Web page can obtain the positional information of a mobile terminal or the like in a frame of the standard. Thus, a service in conjunction with the information of the current position of a user, such as a "nearby store search" provided by the Web page or the like, may become popular. A user is capable of receiving a convenient service by transmitting the information of the current position via the Internet or the like.

On the other hand, such a possibility that a malicious Web site or the like obtains the information of the current position of a user may be increased. It is necessary to take countermeasures to protect the privacy of a user. For example, a system is conceivable in which a network manager checks the security of each Web site, and the information of the current position of a user is transmitted to only a Web site that has been recognized as a safe Web site. Alternatively, a system is also conceivable in which a dialog for urging a user to judge whether to transmit the information of the current position of the user to a Web site or the like is displayed, that is, whether the information is provided or not is judged at a user's own risk.

However, in the case where the aforementioned HTML5 is used as the standard, point-by-point checking of the security of each Web site on the Internet is difficult. Further, even in the case where the dialog is displayed, there is a possibility that a user may make an erroneous judgment to transmit the information of the current position. Furthermore, there is a possibility that a user may automatically operate to permit information provision without judging whether to provide the information of the current position, because of troublesomeness of an operation for responding to the dialog.

In view of the above-mentioned circumstances, it is desirable to provide an information processing apparatus, an information processing method, a program, a server apparatus, and an information processing system capable of suppressing the possibility that the information of the current position of a user is transmitted to a malicious site or the like on a network.

According to an embodiment of the present invention, there is provided an information processing apparatus including a first obtaining unit, a setting unit, and a judgment unit.

The first obtaining unit is capable of obtaining current position information.

The setting unit sets a first judgment condition to judge whether the current position information obtained by the first obtaining unit is transmitted to a site on a network that requests the current position information.

The judgment unit judges whether the current position information is transmitted to the site on the basis of the first judgment condition set by the setting unit.

In the information processing apparatus, the first judgment condition for transmitting the current position information to the site on the network is set, and on the basis of the judgment condition, it is judged whether the current position information is transmitted to the site or not. Thus, by setting the judgment condition as appropriate, it is possible to suppress such a possibility that the information about the current position of a user is transmitted to a malicious site or the like on the network.

The information processing apparatus may further include a second obtaining unit capable of obtaining address information of the site, current time information, and date information.

In this case, the setting unit may set the first judgment condition on the basis of the current position information obtained by the first obtaining unit and the address information, the current time information, and the date information obtained by the second obtaining unit.

In the information processing apparatus, it is possible to set the first judgment condition as appropriate on the basis of the current position information, the address information of the site, the current time information, and the date information.

The information processing apparatus may further include a generation unit for generating temporary position information on the basis of the current position information obtained by the first obtaining unit, the temporary position information being position information different from the current position information.

In this case, the setting unit may set the first judgment condition and a second judgment condition to judge whether the temporary position information generated by the generation unit is transmitted to the site instead of the current position information.

The judgment unit may judge whether the current position information is transmitted to the site and judge whether the temporary position information is transmitted to the site instead of the current position information on the basis of the first judgment condition and the second judgment condition.

In the information processing apparatus, the temporary position information is generated on the basis of the current position information. For example, in the case where the information of the current position of the user meets a predetermined condition, instead of the current position information, the temporary position information is transmitted to the site. Thus, it is possible to suppress such a possibility that the information about the current position of the user is transmitted to the malicious site or the like.

According to another embodiment of the present invention, there is provided an information processing method performed by an information processing apparatus, including the followings.

That is, the information processing apparatus obtains current position information.

A judgment condition is set to judge whether the obtained current position information is transmitted to a site on a network that requests the current position information.

Whether the current position information is transmitted to the site is judged on the basis of the set judgment condition.

According to another embodiment of the present invention, there is provided a program that causes an information processing apparatus to execute the aforementioned method. The program may be recorded in a recording medium.

According to another embodiment of the present invention, there is provided a server apparatus including a reception unit, a setting unit, and a transmission unit.

The reception unit receives current position information of an information processing apparatus. The current position information is transmitted via a network by the information processing apparatus.

The setting unit sets a judgment condition to judge whether the current position information received by the reception unit is transmitted to a site on the network that requests the current position information.

The transmission unit judges whether the current position information is transmitted to the site on the basis of the judgment condition set by the setting unit, and transmits a judgment result to the information processing apparatus.

According to another embodiment of the present invention, there is provided an information processing system including an information processing apparatus and a server apparatus.

The information processing apparatus includes an obtaining unit capable of obtaining current position information, and a transmission unit for transmitting the current position information obtained by the obtaining unit to a network.

The server apparatus includes a reception unit, a setting unit, and a transmission unit.

The reception unit receives the current position information transmitted by the information processing apparatus.

The setting unit sets a judgment condition to judge whether the current position information received by the reception unit is transmitted to a site on the network that requests the current position information.

The transmission unit judges whether the current position information is transmitted to the site on the basis of the judgment condition set by the setting unit, and transmits a judgment result to the information processing apparatus.

In the information processing system, the server apparatus sets the judgment condition to judge whether the current position information is transmitted to the site, and on the basis of the judgment condition, judges whether the current position information is transmitted or not. Therefore, for example, by using an apparatus having a large storage capacity as the server apparatus, it is possible to set the judgment condition in more detail. Thus, it is possible to suppress such a possibility that the information about the current position of the user is transmitted to the malicious site or the like.

As described above, according to the embodiments of the present invention, it is possible to suppress such a possibility that the information about the current position of the user is transmitted to the malicious site or the like on the network.

These and other aims, features and advantages of the present invention will become more apparent in light of the following detailed description of best mode embodiments thereof, as illustrated in the accompanying drawings. Preferably, the embodiments are capable of transmitting information of a current position of a user via the Internet or the like and receiving information of a store or the like based on the positional information. Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a diagram showing a structural example of a network system including an information processing apparatus according to a first embodiment of the present invention;
Fig. 2 is a diagram for explaining Web pages that constitute a Web site shown in Fig. 1;
Fig. 3 is a conceptual diagram showing a structural example of a mobile terminal as the information processing apparatus according to the first embodiment;
Fig. 4 is a diagram for explaining an operation of the mobile terminal as the information processing apparatus according to the first embodiment;
Fig. 5 is a flowchart showing a condition judgment algorism according to the first embodiment;
Fig. 6 is a diagram for explaining Lat/Lon and Accuracy as temporary position information obtained by calculation in the first embodiment;
Fig. 7 is a diagram showing a modified example about the calculation of the Lat/Lon as the temporary position information shown in Fig. 6;
Fig. 8 is a diagram showing a structural example of a network system including an information processing system according to a second embodiment of the present invention;
Fig. 9 is a conceptual diagram showing a structural example of a server apparatus of the information processing system according to the second embodiment; and
Fig. 10 is a diagram for explaining an operation of the information processing system according to the second embodiment.

Hereinafter, embodiments of the present invention will be described with reference to the drawings.

### <First embodiment>

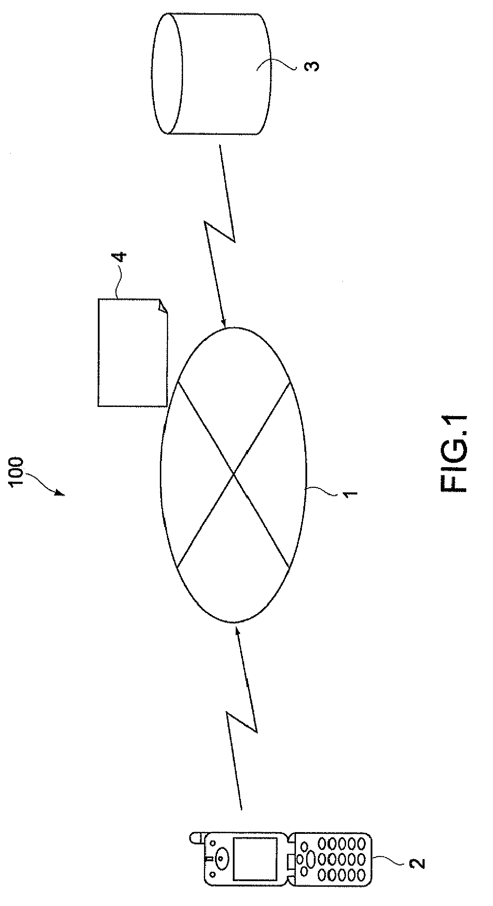

Fig. 1 is a diagram showing a structural example of a network system including an information processing apparatus according to a first embodiment of the present invention. A network system 100 includes a mobile terminal 2 as the information processing apparatus according to this embodiment, which is connectable to a network 1, and a Web server 3 that is connected to the network 1. The network 1 uses the TCP/IP (transmission control protocol/Internet protocol), for example. The mobile terminal 2 is a mobile phone, a laptop PC (personal computer), or various PDA (personal digital assistant), for example.

The Web server 3 uses a WWW (world wide web) system to release a Web site 4 constituted of a plurality of Web pages on the network 1. The Web site 4 requests current position information of the mobile terminal 2 used by a user as the information of the current position of the user via the network 1. The Web site 4 is capable of transmitting information of a store or the like near the current position of the user to the mobile terminal 2, as a service based on the current position information transmitted from the mobile terminal 2. As address information of the Web site 4 on the network 1, a URL (uniform resource locator) is typically used.

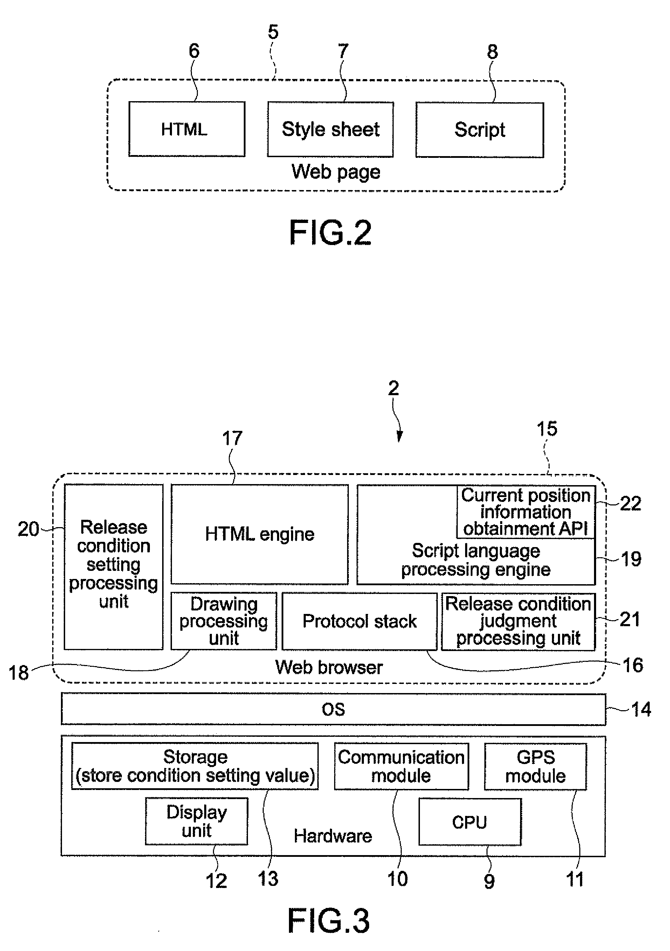

Fig. 2 is a diagram for explaining the Web pages that constitute the Web site 4. A Web page 5 is an HTML document described in an HTML 6. In the document, pieces of information of an image, music, and the like and a hyperlink to another Web page are embedded, for example. Further, in the Web page 5, a style sheet 7 for improving design of the Web page 5, a script 8 for exerting a function that is difficult to be realized only in the HTML 6, and the like are used. In this embodiment, as a script language for describing the script 8, Java (registered trademark) Script is used, but the script language is not limited thereto.

The Web page 5 in this embodiment is formed in accordance with the "HTML5" standard described above and is capable of obtaining the current position information of the mobile terminal 2 with the GeoLocation function. In other words, in this embodiment, a request for the current position information by the Web site 4 is met by the Web page 5. However, the present invention is not limited to the case where the request for the current position information by the Web site 4 is met by the Web page 5.

### (Structure of information processing apparatus)

Fig. 3 is a conceptual diagram showing a structural example of the mobile terminal 2 as the information processing apparatus according to this embodiment. The mobile terminal 2 has a CPU (central processing unit) 9, a communication module 10, a GPS module 11, a display unit 12, and a storage 13.

The communication module 10 uses, for example, the Ethernet (registered trademark) or another standard to enables the mobile terminal 2 to be connected with the network 1 in a wired or wireless manner. By the communication module 10, by using radio waves of a wireless LAN, such as Wi-Fi, the current position information of the mobile terminal 2 may be determined.

The GPS module 11 detects the current position information of the mobile terminal 2 on the basis of radio waves from a GPS satellite. In the case where the current position information of the mobile terminal 2 is determined by the communication module 10 as described above, the GPS module 11 may be eliminated.

The display unit 12 is a display device that uses liquid crystal, EL (electro-luminescence), or the like.

The storage 13 is a nonvolatile storage device such as an HDD (hard disk drive), a flash memory, or another solid-state memory. In the storage 13, a condition setting value to be described later is stored.

Further, the mobile terminal 2 has a storage device such as a ROM (read only memory) and a RAM (random access memory) (not shown). The CPU 9 reads an OS (operating system) 14 from the ROM or the like and executes the OS using a work area secured on the RAM. Thus, the whole blocks of the mobile terminal 2 are controlled by the CPU 9.

In addition, as shown in Fig. 3, the mobile terminal 2 has a Web browser 15 that is stored in the storage device. The Web browser 15 has a protocol stack 16 for the communication via the network 1, an HTML engine 17 for interpreting the Web page 5 constituted of the HTML document, and a drawing processing unit 18 for displaying the Web page 5 interpreted on the display unit 12. The Web browser 15 further has a script language processing engine 19 for processing a script language in the Web page 5, a release condition setting processing unit 20 as a setting means, and a release condition judgment processing unit 21 for the current position information as a judgment means.

### (Operation of information processing apparatus)

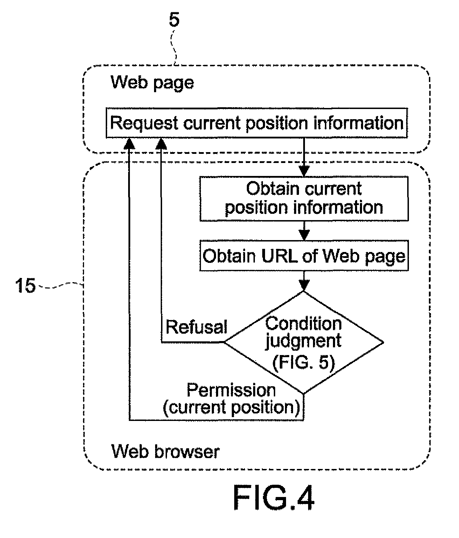

Fig. 4 is a diagram for explaining an operation of the mobile terminal 2 as the information processing apparatus according to this embodiment. The Web browser 15 held by the mobile terminal 2 provides an API (application programming interface) 22 for obtaining the current position information with respect to the script 8 of the Web page 5 (see, Fig. 3). The Web page 5 uses the API 22 to request the current position information of the mobile terminal 2 via the network 1. Hereinafter, given is one example of the current position information obtainment API 22 of the GeoLocation standard provided to Java (registered trademark) Script by the Web browser 15.

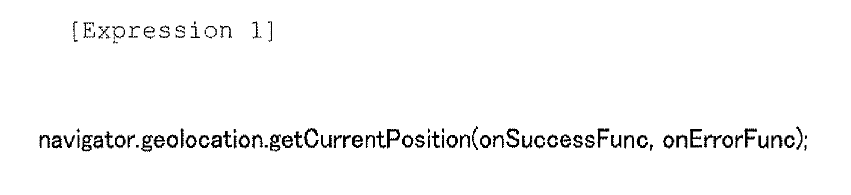

The Web browser 15 of the mobile terminal 2 obtains the current position information thereof using the communication module 10 or the GPS module 11. Further, the Web browser 15 obtains the URL as the address information of the Web page 5 that requests the current position information of the mobile terminal 2. The current position information of the mobile terminal 2 and the URL of the Web page 5 are input to a condition judgment algorism of the release condition judgment processing unit 21.

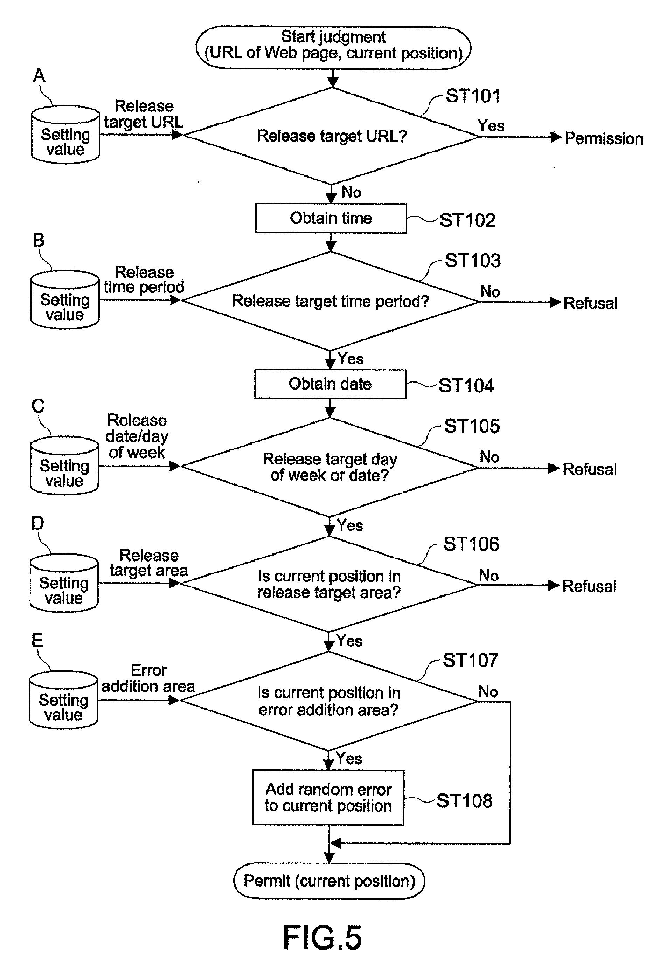

Fig. 5 is a flowchart showing the condition judgment algorism. The release condition judgment processing unit 21 judges whether the URL of the Web page 5 is a URL to be a release target of the current position information or not (Step 101). When it is judged that the URL of the Web page 5 is the release target (Yes in Step 101), the Web browser 15 provides a judgment result that the release is permitted, and the current position information is returned to the script 8 of the Web page 5. As a result, the current position information of the mobile terminal 2 is transmitted to the Web site 4 via the network 1.

When a description will be given using the API 22, for example, onSuccessFunc, which is a first argument of getCurrentPosition, is a Java (registered trademark) Script function. In the case where the current position information is successful in being obtained by the mobile terminal 2, the function is called back along with the current position information. In the case where the Web browser 15 provides the judgment result that the release is permitted, the function is called back to the script 8 of the Web page 5. To the first argument of the onSuccessFunc function called back, an object generated by the Web browser 15 is given, and the current position information is stored as a property of the object. In the following, latitude and longitude as the current position information in the called-back function and an example of obtaining accuracy thereof are shown.

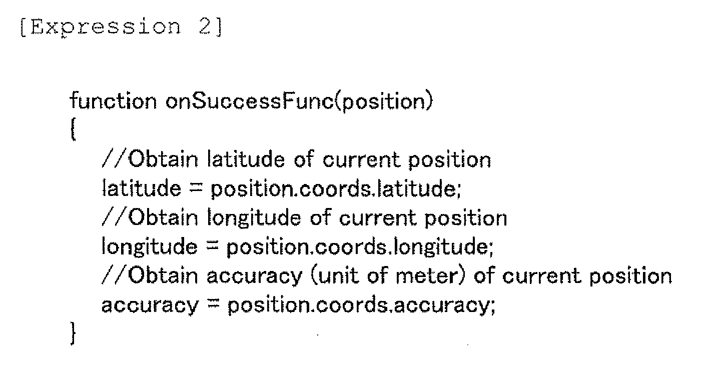

In Step 101 of Fig. 5, in the case where it is judged that the URL of the Web page 5 does not correspond to the release target (No in Step 101), the Web browser 15 obtains information of a current time (Step 102). Alternatively, the Web browser 15 may obtain current time information in advance, and the current time information may be used in Step 102.

On the basis of the current time information, it is judged whether the current time is in a time period during which the current position information is released to the Web page 5 (Step 103). In the case where it is not judged that the current time is in the time period during which the current position information is released to the Web page 5 (No in Step 103), the Web browser 15 provides a judgment result that the release is refused, and an invalid value is returned to the script 8 of the Web page 5.

For example, in the API 22, in the case where the current position information fails to be obtained by the mobile terminal 2, onErrorFunc function, which is a second argument of getCurrentPosition is called back along with information about a reason of the failure. To a first argument of the called-back onErrorFunc function, an object generated by the Web browser 15 is given, and the information of the reason of the failure is stored as a property of the object. In the following, a code of the reason of the failure and an example of obtaining a character string in a callback function are shown.

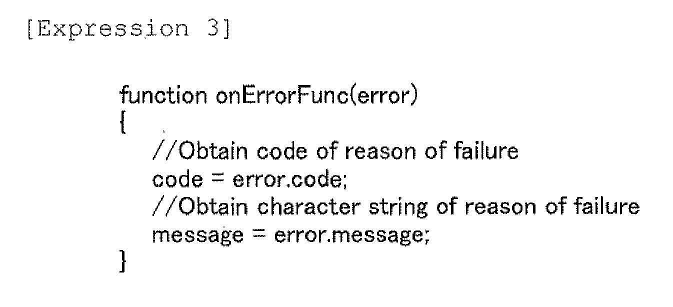

As the code of the reason of the failure, the following can be given, for example.

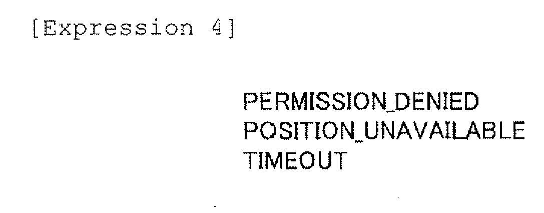

For example, in the case where the judgment result shows the refusal in Step 103 of Fig. 5, PERMISSION_DENIED is used as the code of the reason of the failure. At this time, such an indication that the condition of permitting the release of the current position information is not met may be displayed on the display unit 12 of the mobile terminal 2.

In Step 103 of Fig. 5, in the case where it is judged that the current time is in the time period during which the current position information is released to the Web page 5 (Yes in Step 103), the Web browser 15 obtains information of a date (Step 104). As the date information, information of year, month, and date may be obtained, or information of a day of the week may be obtained. Alternatively, the Web browser 15 may obtain the date information in advance, and the date information may be used in Step 104.

On the basis of the date information, it is judged whether the date when the current position information is requested by the Web page 5 is a date of the release target (Step 105). In the case where it is not judged that the date concerned is the date when the current position information is released to the Web page 5 (No in Step 105), a judgment result of a release refusal is provided.

In Step 103 of Fig. 5, in the case where it is judged that the date when the current position information is requested is the date of the release target (Yes in Step 105), it is judged whether the current position of the mobile terminal 2 is in a release target area on the basis of the current position information of the mobile terminal 2 (Step 106). If the current position is in the release target area, the current position information is released to the Web page 5. In the case where it is not judged that the current position of the mobile terminal 2 is in the release target area (No in Step 106), a judgment result of a release refusal is provided.

In the case where it is judged that the current position of the mobile terminal 2 is in the release target area (Yes in Step 106), subsequently, it is judged whether the current position of the mobile terminal 2 is in an error addition area (Step 107). In the case where it is not judged that the current position is in the error addition area (No in Step 107), a judgment that the release is permitted is made, and the current position information of the mobile terminal 2 is returned to the Web page 5. In the case where it is judged that the current position is in the error addition area (Yes in Step 107), temporary position information in which a random error is added to the current position is generated on the basis of the current position information (Step 108). Then, instead of the current position information, the temporary position information is returned to the Web page 5. In this case, the temporary position information is transmitted to the Web site 4.

Next, a description will be given on the setting of a judgment condition for each of the steps of Fig. 5. The setting of the judgment condition is performed by the release condition setting processing unit 20 of the Web browser 15 shown in Fig. 3. For example, the release condition setting processing unit 20 causes a menu or a local page for the setting of the judgment condition to be displayed on the display unit 12. A user inputs a setting value of the judgment condition with the use of various function keys such as numerical keys, up and down arrow keys, and right and left arrow keys while watching the menu or the like displayed on the display unit 12. The input condition setting value is stored in the storage 13 of the mobile terminal 2 (see, Fig. 3). It should be noted that a default of the condition setting value may be stored in the storage 13 in advance.

In Step 101 of Fig. 5, the URL, which is the address information of the Web site 4 or the Web page 5 as the release target, is used as a condition setting value A. Thus, such a possibility that the current position information is transmitted to the Web page 5 or the like having a URL that is not set as the release target can be suppressed. In Step 101, address information other than the URL may be used.

In Step 103, a condition setting value B about the time period during which the current position information is released is used. A time period during which a user often uses a service based on the current position information is given as an example. In the case of a user who often searches for a store to stop in on the way home from work, for example, the condition setting value B is input which permits the release of the current position information from 19 to 21 o'clock. As a result, such a possibility that the current position information is transmitted to a malicious Web site or the like during a time period exclusive of the hours from 19 to 21 o'clock, during which the user does not use the service, is eliminated.

In Step 105, a condition setting value C about a date when the current position information is released is used. A period during which a user does not carry the mobile terminal 2 and a day of the week when a user uses a service based on the current position information is given as examples. For example, during a period between August 13 to August 23 during which the user goes out for a trip without the mobile terminal 2, the condition setting value C for inhibiting the current position information from being released is input. Alternatively, the condition setting value C for releasing the current position information on holidays such as weekends not on weekdays is input. As a result, such a possibility that the current position information of the mobile terminal 2 is transmitted to a malicious Web site or the like when a third party operates the mobile terminal 2 during the trip of the user is eliminated.

In Step 106, a condition setting value D about the release target area to which the current position information is released is used. As the release target area, for example, an area where a lot of stores or the like for which a user wants to search are located, an area where the user is often present when using the service, and the like are given. Further, the vicinity of an important area relating to the privacy of the user, such as a user's home and office, may be set as an area in which the current position information is refused to be released. Specifically, inputted is such a condition setting value D that in the case where the user is within 300 meters of the Yamanote line, the release of the current position information is permitted, or in the case where the user is within 500 meters of the home, the release of the current position information is refused. As a result, it is possible to prevent the important positional information for the privacy of the user from being transmitted, so the privacy of the user is protected.

As described above, in Steps 101, 103, 105, and 106 shown in Fig. 5, the condition setting values (A to D) based on the address information (URL), the current time information, the date information, and the current position information are used as the first judgment condition. On the basis of those condition setting values, it is judged whether the current position information of the mobile terminal 2 as the information about the current position of the user is transmitted to the Web page 5, the Web site 4, or the like. Thus, the aforementioned condition setting values are set as appropriate, with the result that it is possible to suppress such a possibility that the information about the current position of the user is transmitted to the malicious Web site 4 or the like on the network 1.

At least one of the aforementioned condition setting values may be used to constitute the condition judgment algorism. Alternatively, any condition setting values may be combined to constitute the condition judgment algorism. For example, the condition setting value A based on the address information and the condition setting value C based on the date information may be combined to constitute the condition judgment algorism, or the condition setting value B based on the current time information and the condition setting value D based on the current position information may be combined to constitute the condition judgment algorism. In this way, it is also possible to decide which condition setting values are used to constitute the condition judgment algorism.

In Step 107 of Fig. 5, as a second judgment condition, a condition setting value E about the error addition area for releasing the temporary position information instead of the current position information is used. In the description of the release target area (Step 106), the example in which the current position information is not released within 500 meters of the user's home is given above. However, there may be such a request that a user wants to use the service of the Web site 4 based on the current position information near the home. In this case, an area within 500 meters of the home is set as the error addition area (in Step 106, the area within 500 meters of the home is set as the release target area). Then, the Web browser 15 transmits, instead of the current position information, the temporary position information obtained by adding the random error to the current position to the Web page 5 in the case where it is judged that the user is in the error addition area within 500 meters of the home. As a result, it is possible to suppress such a possibility that the current position information that is important for the privacy of the user is transmitted to the malicious Web page 5 or the like. It is possible for the user to use the service of the Web site 4 based on the temporary position information.

Here, a description will be given on an example of the temporary position information generated by the Web browser 15. In the description, the current position information is represented as follows.
LatOrg/LonOrg (degree): latitude and longitude of the current position which are obtained by the GPS module 11 or the like (current position information)
AccuracyOrg (meter): positioning accuracy of current position information (maximum error)
AccuracyAdd (meter): error intentionally added
random (): helper function that generates a random number of 0.0 to 1.0
Lat/Lon (degree): latitude and longitude of the position to which the random error is added (temporary position information)
Accuracy (meter): final positioning accuracy (maximum error)

A process for converting an error in meters to the latitude and longitude in degrees has to consider a difference between a sphere as a model of the latitude and longitude and the actual earth shape, and depends on the latitude and longitude. Therefore, for the process, helper functions for converting the error in meters to the latitude and longitude in degrees are respectively defined as follows.

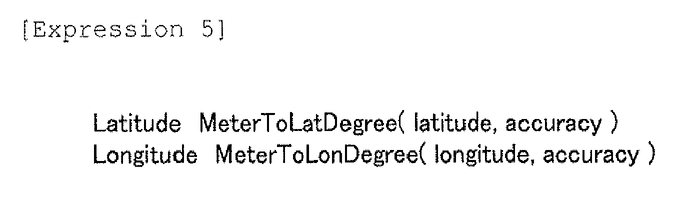

Therefore, a Lat/Lon and Accuracy are obtained by the following expressions.

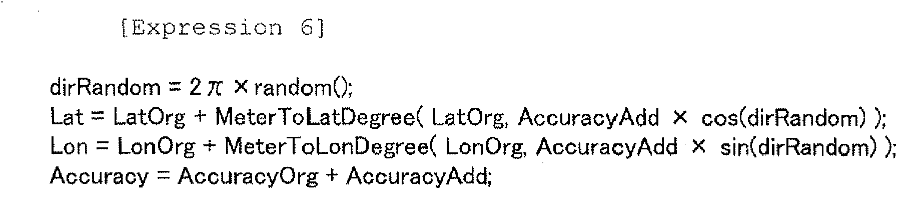

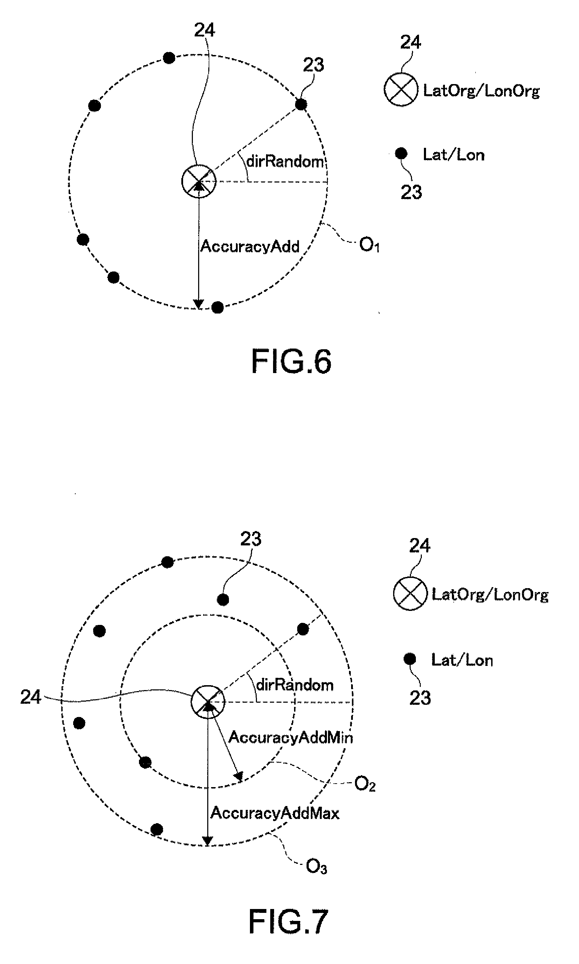

Fig. 6 is a diagram for explaining the Lat/Lon and the Accuracy that are obtained from the aforementioned expressions. As shown in Fig. 6, a Lat/Lon 23 is located on a position on the circumference of a circle O₁ having the center of a LatOrg/LonOrg 24 and the radius of an AccuracyAdd.

Fig. 7 is a diagram showing a modified example about the calculation of the Lat/Lon 23 as the temporary position information. As shown in Fig. 7, the AccuracyAdd is increased or decreased at random within a range between an AccuracyAddMin (meter) and an AccuracyAddMax (meter). Thus, the position of the Lat/Lon 23 is dispersed between the circumferences of a circle O₂ having the radius of the AccuracyAddMin and a circle O₃ having the radius of the AccuracyAddMax. The position of the Lat/Lon 23 may be set as described above.

Alternatively, as the temporary position information, a user may set a specific position. For example, the position of the nearest station used by the user or the position of a characteristic building near the user's home may be set as the temporary position information. In the case where the Web browser 15 judges that the user is within 500 meters from the home, the Web browser 15 transmits to the Web page 5 the temporary position information that has been set by the user. For example, if a position in an area where a lot of stores or the like which the user requests are located is set as the temporary position information, the user is capable of effectively using the service based on the temporary position information. In this way, it is also possible to suppress such a possibility that the current position information is transmitted to the malicious Web site 4 or the like.

### <Second embodiment>

A description will be given on an information processing system according to a second embodiment of the present invention. In the following, descriptions on the same structures as the various apparatuses, the communication system, or the like used for the network system 100 described in the first embodiment are omitted or simplified.

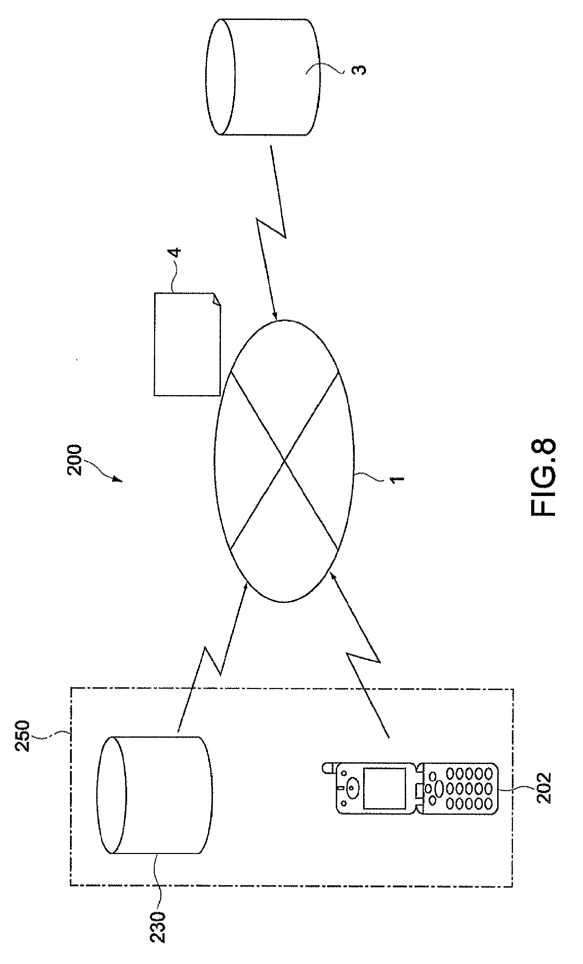

Fig. 8 is a diagram showing a structural example of a network system including an information processing system according to the second embodiment. A network system 200 includes an information processing system 250 and the Web server 3 connected to the network 1. The information processing system 250 has a mobile terminal 202 and a server apparatus 230 which are capable of being connected to the network 1.

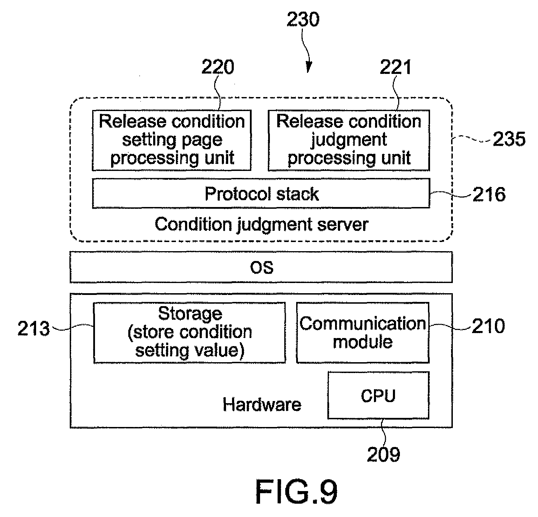

Fig. 9 is a conceptual diagram showing a structural example of the server apparatus 230 of the information processing system 250 according to this embodiment. The server apparatus 230 has a CPU 209, a communication module 210, and a storage 213. Further, the server apparatus 230 has, as a condition judgment server 235, a protocol stack 216, a release condition setting page processing unit 220, and a release condition judgment processing unit 221.

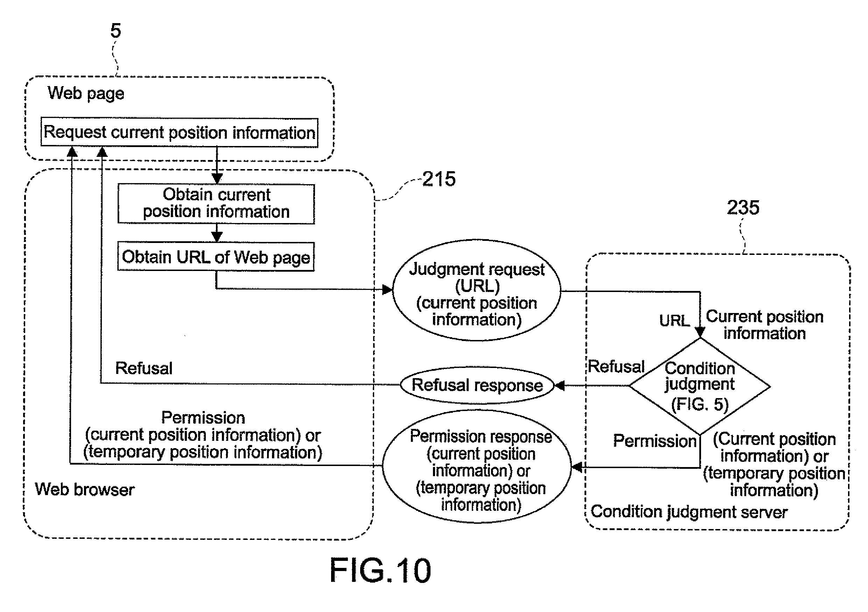

Fig. 10 is a diagram for explaining the operation of the information processing system 250 according to this embodiment. First, a Web browser 215 of the mobile terminal 202 which is shown in Fig. 10 obtains current position information thereof and a URL of the Web page 5 that requests current position information of the mobile terminal 202. The Web browser 215 transmits, as a judgment request message, the obtained current position information and the obtained URL of the Web page 5 to the server apparatus 230 through the network 1 via the protocol stack 216. The server apparatus 230 receives the current position information and the URL of the Web page 5 that are transmitted by the mobile terminal 202 with the communication module 210 and inputs the received current position information and the received URL of the Web page 5 to the condition judgment server 235. In the release condition judgment processing unit 221 of the condition judgment server 235, the current position information of the mobile terminal 202 and the URL of the Web page 5 are input to the condition judgment algorism described with reference to Fig. 5.

In the release condition judgment processing unit 221, it is judged whether the current position information of the mobile terminal 202 is released to the Web page 5. In addition, it is judged whether the temporary position information described in the first embodiment is transmitted instead of the current position information to the Web page 5.

In the release condition judgment processing unit 221, in the case where a judgment result that the release is permitted is obtained, as a permission response message, the current position information or temporary position information of the mobile terminal 202 is transmitted from the server apparatus 230 to the mobile terminal 202 via the protocol stack 216. On the other hand, in the case where a judgment result that the release is refused is obtained, a refusal response message is transmitted from the server apparatus 230 to the mobile terminal 202.

It should be noted that in this embodiment, current time information and date information are obtained by the server apparatus 230. However, the current time information and the date information may be obtained by the mobile terminal 202 and transmitted to the server apparatus 230.

The mobile terminal 202 that has received the permission response message transmits the current position information or the temporary position information of the mobile terminal 202 to the Web page 5. In the case where the refusal response message is received from the server apparatus 230, an invalid value is returned from the mobile terminal 202 to the Web page 5.

The setting of the judgment condition used for the judgment on the release permission or the release refusal is performed by the release condition setting page processing unit 220 of the condition judgment server 235. For example, the release condition setting page processing unit 220 provides a Web page for the setting of the judgment condition to the Web browser 215 of the mobile terminal 202. By using the Web page, a user inputs a condition setting value. Alternatively, the server apparatus 230 is provided with a display unit, and the condition setting value may be directly input to the server apparatus 230 through a menu or the like displayed on the display unit. The input condition setting values are stored in the storage 213 of the server apparatus 230.

As described above, in the information processing system 250 according to this embodiment, the server apparatus 230 judges whether the current position information (temporary position information) of the mobile terminal 2 is transmitted to the Web page 5 or the Web site 4 on the network 1. For example, an assumption is made that an area within 300 meters of the Yamanote line is set as the release target area (condition setting value D in Fig. 5) described in the first embodiment. In this case, it is necessary to store information of the Yamanote line as the information of the latitude and longitude and calculate the area within 300 meters from the information of the line, so a data amount to be treated is large. Therefore, in the mobile terminal 2 described in the first embodiment, there may arise a problem of a shortage of a storage capacity or a burden on a processing resource. However, as in this embodiment, in the case where the server apparatus 230 makes the condition judgment, for example, an apparatus having a large storage capacity is used as the server apparatus 230, thereby making it possible to avoid the aforementioned problem. That is, it is possible to make a further detailed judgment condition setting which involves a large data amount to be treated, so it is possible to suppress such a possibility that the information of the current position of the user is transmitted to the malicious Web site 4 or the like.

### <Other embodiments>

The present invention is not limited to the above embodiments, and other various embodiments are provided.

For example, in the condition judgment algorism shown in Fig. 5, for the Web page 5 having a specific URL, the condition setting value B based on the current time information and the condition setting value C based on the date information are used, thereby judging whether the release is permitted or refused. For the Web page 5 having another URL, the condition setting value D based on the release target area is used, thereby judging whether the release is permitted or refused. In this way, the release judgment algorism may be structured in more detail on the basis of the contents of the respective condition setting values shown in Fig. 5. As another example of this explanation, in the case where the release target area is set in more detail, and it is judged that the user is in a specific release target area, another condition setting value is not used, and the judgment whether the release is permitted or refused is made. In the case where it is judged that the user is in another release target area, an example in which the condition setting value B based on the current time information is used is given.

When the judgment result that the release is permitted is obtained, and the current position information is transmitted to the Web page or the like, a dialog for indicating whether the current position information may be transmitted may be displayed for the user. However, as described in the above embodiments, it is possible to suppress such a possibility that the information of the current position of the user is transmitted to the malicious Web site or the like without displaying the dialog. Therefore, the user does not have to perform a troublesome operation when using the service of the site on the network.

For example, there is a case where, outside the release target area, the user wants to transmit the current position information to a Web site, the security of which is sufficiently ensured. For this case, such a menu that the release of the current position information is constantly permitted may be temporarily prepared as a Web browser function of the mobile terminal, for example. In contrast, such a menu that the release of the current position information is constantly refused may be temporarily prepared by the Web browser.

In Step 107 of Fig. 5, as the temporary position information that is transmitted in the case where it is judged that the current position information is in the error addition area, the current position information, the positioning accuracy of which is allowed to be lowered, may be transmitted. For example, in the above, the current position information, the positioning accuracy of which is expressed in unit of meter, is given as an example. However, the current position information obtained with the positioning accuracy in unit of kilometer may be used as the temporary position information. For example, when using a service or the like that gives the weather forecast for each area, the user is capable of sufficiently using the service on the basis of the temporary position information as described above.

In the second embodiment described with reference to Fig. 8, the server apparatus 230 is connected to the network 1, and the server apparatus 230 and the mobile terminal 202 are connected with each other via the network 1. However, the server apparatus 230 and the mobile terminal 202 may be connected in a local area via the LAN (local area network) or the like.

In the above description, the processing described as the functions and operations of the CPU, the Web browser, or the like of the mobile terminal and the server apparatus may be implemented by different hardware or both of software and hardware. In the case where the processing is implemented by the software and hardware, the hardware includes at least a storage device that stores a software program. For example, by selectively using at least one of a CPU, an MPU (micro processing unit), a RAM, a ROM, a DSP (digital signal processor), an FPGA (field programmable gate array), an ASIC (application specific integrated circuit), a display device, an NIC (network interface card), a WNIC (wireless NIC), a modem, an optical disk, a magnetic disk, and a flash memory, the information processing apparatus, the server apparatus, or the information processing system according to the embodiments of the present invention may be configured.

The present application contains subject matter related to that disclosed in Japanese Priority Patent Application JP 2010-061350 filed in the Japan Patent Office on March 17, 2010. In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus, comprising:
a first obtaining unit capable of obtaining current position information;
a setting unit for setting a first judgment condition to judge whether the current position information obtained by the first obtaining unit is transmitted to a site on a network that requests the current position information; and
a judgment unit for judging whether the current position information is transmitted to the site on the basis of the first judgment condition set by the setting unit.

2. The information processing apparatus according to claim 1, further comprising:
a second obtaining unit capable of obtaining address information of the site, current time information, and date information, wherein
the setting unit sets the first judgment condition on the basis of the current position information obtained by the first obtaining unit and the address information, the current time information, and the date information obtained by the second obtaining unit.

3. The information processing apparatus according to claim 1, further comprising:
a generation unit for generating temporary position information on the basis of the current position information obtained by the first obtaining unit, the temporary position information being position information different from the current position information, wherein
the setting unit sets the first judgment condition and a second judgment condition to judge whether the temporary position information generated by the generation unit is transmitted to the site instead of the current position information, and
the judgment unit judges whether the current position information is transmitted to the site and judges whether the temporary position information is transmitted to the site instead of the current position information on the basis of the first judgment condition and the second judgment condition.

4. An information processing method executed by an information processing apparatus, the method comprising:
obtaining current position information;
setting a judgment condition to judge whether the obtained current position information is transmitted to a site on a network that requests the current position information; and
judging whether the current position information is transmitted to the site on the basis of the set judgment condition.

5. A program that causes an information processing apparatus to execute
obtaining current position information,
setting a judgment condition to judge whether the obtained current position information is transmitted to a site on a network that requests the current position information, and
judging whether the current position information is transmitted to the site on the basis of the set judgment condition.

6. A server apparatus, comprising:
a reception unit for receiving current position information of an information processing apparatus, the current position information being transmitted via a network by the information processing apparatus;
a setting unit for setting a judgment condition to judge whether the current position information received by the reception unit is transmitted to a site on the network that requests the current position information; and
a transmission unit for judging whether the current position information is transmitted to the site on the basis of the judgment condition set by the setting unit, and transmitting a judgment result to the information processing apparatus.

7. An information processing system, comprising:
an information processing apparatus including an obtaining unit capable of obtaining current position information, and a transmission unit for transmitting the current position information obtained by the obtaining unit to a network; and
a server apparatus including a reception unit for receiving the current position information transmitted by the information processing apparatus, a setting unit for setting a judgment condition to judge whether the current position information received by the reception unit is transmitted to a site on the network that requests the current position information, and a transmission unit for judging whether the current position information is transmitted to the site on the basis of the judgment condition set by the setting unit, and transmitting a judgment result to the information processing apparatus.
